(19) Europäisches Patentamt / European Patent Office / Office européen des brevets

(11) **EP 3 744 946 B1**

(12) **FASCICULE DE BREVET EUROPEEN**

(45) Date de publication et mention de la délivrance du brevet:
**12.07.2023 Bulletin 2023/28**

(21) Numéro de dépôt: **20175185.6**

(22) Date de dépôt: **18.05.2020**

(51) Classification Internationale des Brevets (IPC):
**E21B 43/00** $^{(2006.01)}$    **G01V 99/00** $^{(2009.01)}$

(52) Classification Coopérative des Brevets (CPC):
**E21B 43/00; G01V 99/005;** G01V 2210/661

(54) **PROCÉDÉ POUR MODELISER UN BASSIN SÉDIMENTAIRE, AU MOYEN DE LA PRISE EN COMPTE D'AU MOINS UN MÉCANISME DE MIGRATION PRÉPONDERANT**

VERFAHREN ZUR MODELLIERUNG EINES SEDIMENTBECKENS UNTER EINBEZIEHUNG MINDESTENS EINES ÜBERWIEGENDEN MIGRATIONSMECHANISMUS

METHOD FOR MODELLING A SEDIMENTARY BASIN, BY TAKING INTO ACCOUNT AT LEAST ONE PREPONDERANT MIGRATION MECHANISM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.05.2019 FR 1905606**

(43) Date de publication de la demande:
**02.12.2020 Bulletin 2020/49**

(73) Titulaire: **IFP Energies nouvelles**
**92852 Rueil-Malmaison Cedex (FR)**

(72) Inventeurs:
* **TRABY, Renaud**
  **92852 Rueil-Malmaison Cedex (FR)**
* **PEGAZ-FIORNET, Sylvie**
  **92852 Rueil-Malmaison Cedex (FR)**
* **WOLF, Sylvie**
  **92852 Rueil-Malmaison Cedex (FR)**
* **FAILLE, Isabelle**
  **92852 Rueil-Malmaison Cedex (FR)**
* **WILLIEN, Françoise**
  **92852 Rueil-Malmaison Cedex (FR)**

* **DUCROS, Mathieu**
  **92852 Rueil-Malmaison Cedex (FR)**

(74) Mandataire: **IFP Energies nouvelles**
**Département Propriété Industrielle**
**Rond Point de l'échangeur de Solaize**
**BP3**
**69360 Solaize (FR)**

(56) Documents cités:
**US-A1- 2014 358 502**

* **Mubarak Matlak Al-Hajeri ET AL: "Basin and Reservoir System Modeling", Oilfield Review Summer 2009, 21 juin 2009 (2009-06-21), pages 14-29, XP055066538, Extrait de l'Internet: URL:http://www.slb.com/~/media/Files/resources/oilfield_review/ors09/sum09/basin_petroleum.ashx [extrait le 2013-06-13]**
* **SCHNEIDER F.: "Modelling multi-phase flow of petroleum at the sedimentary basin scale", JOURNAL OF GEOCHEMICAL EXPLORATION, vol. 78-79, 2003, pages 693-696, XP002797435,**

**Description**

**Domaine technique**

La présente invention concerne le domaine de l'exploration et de l'exploitation des gisements pétroliers ou de sites de stockage géologique de gaz.

L'exploration pétrolière consiste à rechercher des gisements d'hydrocarbures au sein d'un bassin sédimentaire. La compréhension des principes de la genèse des hydrocarbures et leurs liens avec l'histoire géologique du sous-sol, a permis la mise au point de méthodes d'évaluation du potentiel pétrolier d'un bassin sédimentaire.

La démarche générale de l'évaluation du potentiel pétrolier d'un bassin sédimentaire comporte des allers-retours entre :

- une prédiction du potentiel pétrolier du bassin sédimentaire, réalisée à partir d'informations disponibles concernant le bassin étudié (affleurements, campagnes sismiques, forages par exemple). Cette prédiction vise à mieux comprendre l'architecture et l'histoire géologique du bassin étudié, notamment à étudier si des processus de maturation et de migration d'hydrocarbures ont pu se mettre en place, à identifier les zones du sous-sol dans lesquelles ces hydrocarbures ont pu s'accumuler, à définir quelles zones présentent le meilleur potentiel économique, évalué à partir du volume et de la nature des hydrocarbures probablement piégés (viscosité, taux de mélange avec de l'eau, composition chimique, etc), ainsi que de leur coût d'exploitation (contrôlé par exemple par la profondeur et la pression de fluide).
- des forages d'exploration dans les différentes zones présentant le meilleur potentiel, afin de confirmer ou infirmer le potentiel prédit préalablement, et d'acquérir de nouvelles données pour alimenter de nouvelles études plus précises.

L'exploitation pétrolière d'un gisement consiste, à partir des informations récoltées lors de la phase d'exploration pétrolière, à sélectionner les zones du gisement présentant le meilleur potentiel pétrolier, à définir des schémas d'exploitation optimaux pour ces zones (par exemple à l'aide d'une simulation de réservoir, afin de définir les nombre et positions des puits d'exploitation permettant une récupération d'hydrocarbures optimale), à forer des puits d'exploitation et, de façon générale, à mettre en place les infrastructures de production nécessaires au développement du gisement.

Dans les bassins sédimentaires ayant subi une histoire géologique compliquée ou lorsque le volume de données est très important, l'évaluation du potentiel pétrolier d'un bassin sédimentaire requiert de disposer d'outils informatiques permettant la synthèse des informations disponibles, et d'outils informatiques permettant la simulation de l'histoire géologique et des multiples processus physiques qui la contrôlent. Il s'agit d'une démarche dite de « modélisation de bassin ». La famille des logiciels dits de modélisation de bassin permettent de simuler en une, deux ou trois dimensions, les processus sédimentaires, tectoniques, thermiques, hydrodynamiques et de chimie organique et inorganique qui interviennent lors de la formation d'un bassin pétrolier. La modélisation de bassin comporte classiquement trois étapes :

- une étape de construction d'une représentation maillée du bassin étudié, connue sous le terme de géo-modélisation. Cette représentation maillée est le plus souvent structurée en couches, c'est-à-dire qu'un groupe de mailles est affecté à chaque couche géologique du bassin modélisé. Puis, chaque maille de cette représentation maillée est remplie par une ou plusieurs propriétés pétrophysiques, telles que la porosité, le faciès (argile, sable, etc) ou encore leur teneur en matière organique au moment de leur sédimentation. La construction de ce modèle se base sur des données acquises au cours de campagnes sismiques, de mesures dans des puits, de carottages, etc.
- une étape de reconstruction structurale de cette représentation maillée, représentant des états antérieurs de l'architecture du bassin. Cette étape peut être réalisée à l'aide d'une méthode dite de "backstripping", ou encore par une méthode dite de restauration structurale.
- une étape de simulation numérique de phénomènes physiques se déroulant au cours de l'évolution du bassin et contribuant à la formation des pièges pétroliers. Cette étape, connue sous le terme de « simulation de bassin », s'appuie sur une représentation discrétisée de l'espace et du temps pour reconstituer la formation du bassin au cours des temps géologiques. En particulier, la simulation de bassin permet de simuler, au cours des temps géologiques, la formation des hydrocarbures à partir notamment de la matière organique initialement enfouie avec les sédiments, et le transport de ces hydrocarbures, connu sous le terme de « migration », depuis les roches dans lesquelles ils se sont formés jusqu'à celles où ils sont piégés. A l'issue d'une simulation de bassin, on obtient ainsi une cartographie du sous-sol au temps actuel, indiquant l'emplacement probable des gisements, ainsi que la teneur, la nature et la pression des hydrocarbures qui y sont piégés.

Ainsi, cette démarche intégrée permettant la prise en compte et l'analyse des phénomènes à l'origine de la génération, de la migration et de l'accumulation des hydrocarbures dans les bassins sédimentaires permet d'augmenter le taux de succès lors d'un forage d'un puits d'exploration, et permet ainsi une meilleure exploitation de ce bassin.

## Technique antérieure

Les documents suivants seront cités au cours de la description :

Carruthers, Transport of secondary oil migration using gradient-driven invasion percolation techniques. PhD thesis, Heriot-Watt University, Edinburgh, Scotland, UK, 1998.
Schneider F., Modelling multi-phase flow of petroleum at the sedimentary basin scale. Journal of Geochemical exploration 78-79 (2003) 693-696).
Steckler, M.S., and A.B. Watts, Subsidence of the Atlantic-type continental margin off New York, Earth Planet. Sci. Lett., 41, 1-13, 1978.
Sylta, Modeling of secondary migration and entrapment of a multicomponent hydrocarbon mixture using équation of state and ray-tracing modeling techniques, Petroleum migration, Geological Society, Spécial publication n°59, pp.111-112, 1991.

On connaît des outils de simulation de bassin qui permettent de simuler numériquement la formation d'un bassin sédimentaire. On citera par exemple l'outil décrit dans le brevet EP2110686 (US8150669) ou les demandes de brevet EP2816377 (US2014/0377872), EP3075947 (US2016/0290107), EP3182176 (US2017/0177764). Ces outils permettent notamment d'estimer l'évolution de quantités telles que la température et la pression dans l'ensemble d'un bassin sédimentaire au cours des temps géologiques, et ainsi de simuler, au cours des temps géologiques, à la fois la transformation de la matière organique présente dans une roche mère du bassin en hydrocarbures et la migration de ces hydrocarbures produits dans une roche du réservoir du bassin.

On connait en outre les documents :

- Al-Hajeri, Mubarak & Saeed, M. & Derks, Jan & Fuchs, Thomas & Hantschel, T. & Kauerauf, Armin & Neumaier, Martin & Schenk, Oliver & Swientek, O. & Tessen, N.. (2009). Basin and petroleum system modeling. Oilfield Rev.. 21, qui concerne la modélisation de systèmes pétroliers et de bassins sédimentaires par simulation de bassin ;
- US 2014/358502 A1, qui concerne une méthode pour modéliser la migration des hydrocarbures pour la modélisation de bassin.

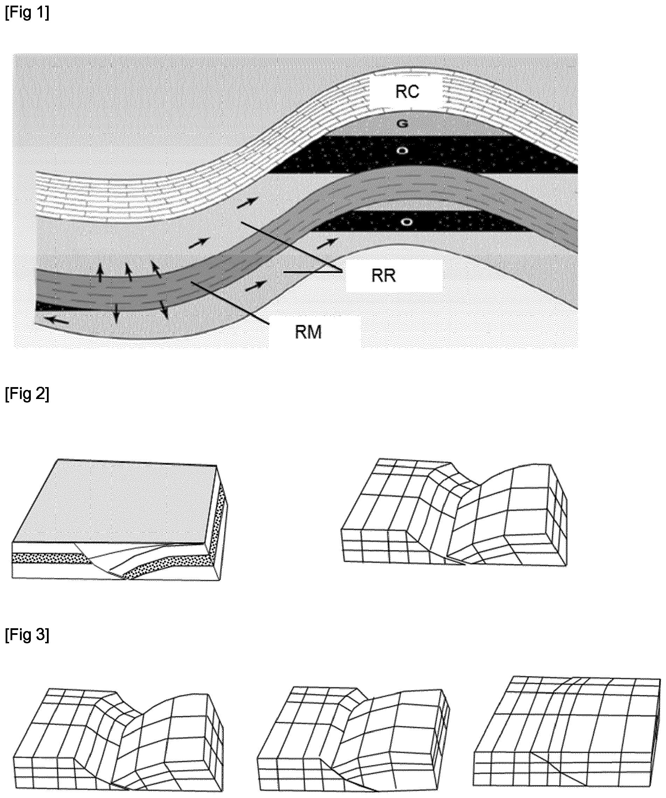

La Figure 1 montre une représentation schématique d'un bassin sédimentaire comportant une roche mère RM dans laquelle sont produits des hydrocarbures par maturation, deux roches réservoirs RR dans lesquelles s'accumulent les hydrocarbures produits sous forme d'huile O et/ou de gaz G, une roche couverture RC, et des exemples possibles, représentés sous la forme de flèches, de chemins de migration suivis par les hydrocarbures entre la roche mère RM et les roches réservoirs RR.

De manière générale, les mécanismes impliqués dans la migration des hydrocarbures peut varier fortement d'un bassin sédimentaire à un autre. Les hydrocarbures sont, en général, issus de la transformation de la matière organique en hydrocarbures fluides sous l'effet d'un stress thermique. Après leur génération, les fluides hydrocarbures peuvent librement circuler dans le réseau poreux formé par les roches. Etant généralement d'une densité inférieure à celle de l'eau, qui sature en grande partie les roches, ils vont avoir tendance à remonter progressivement en direction de la surface sous l'effet de la poussée d'Archimède. Les forces capillaires et l'hydrodynamisme représentent toutefois deux autres forces qui peuvent affecter la direction de migration des hydrocarbures. D'autre part, les hétérogénéités de porosité et de perméabilité vont également jouer un rôle extrêmement important sur la vitesse et la direction de la migration des hydrocarbures.

Les différents mécanismes de migration des hydrocarbures dans un bassin peuvent, par exemple dans le cas où les hydrocarbures sont présents sous une seule phase et où la phase de référence choisie est la phase eau, être modélisés par la loi dite de Darcy généralisée telle que décrite ci-après. Toutefois, via la loi de Darcy généralisée, on a accès à la connaissance de la vitesse de déplacement des hydrocarbures et de leurs chemins de déplacement dans le bassin sédimentaire. Par contre, l'application de cette loi ne permet pas de connaître le ou les mécanismes géologiques et physiques qui sont responsables des déplacements d'hydrocarbures et encore moins leur contribution respective.

Or connaitre les contributions respectives des différents mécanismes de migration des hydrocarbures dans un bassin sédimentaire peut contribuer à une meilleure compréhension du fonctionnement du système pétrolier et ainsi une estimation plus précise du potentiel pétrolier d'un bassin. En effet, le mode de migration des hydrocarbures formés par maturation d'une roche mère peut potentiellement fortement conditionner les vitesses et donc les distances de déplacement, mais aussi les types de pièges dans lesquels les hydrocarbures peuvent s'accumuler. Ainsi, des hydrocarbures qui ne se déplaceraient que par flottabilité, c'est-à-dire pour lesquels le mouvement serait induit par le différentiel de masse volumique, viendraient se concentrer au sein de pièges structuraux (tels que des anticlinaux) se trouvant sur les chemins de migration. Au contraire, si les fluides hydrocarbonés se déplacent à cause majoritairement du gradient de pression, on peut espérer des migrations latérales sur des très longues distances (par exemple sur des centaines de kilomètres) et une plus grande difficulté à remplir les pièges structuraux en raison de l'hydrodynamisme.

Par ailleurs, connaitre le type de mécanisme de migration des hydrocarbures prépondérant pour un bassin sédimentaire peut permettre de réduire la durée d'une étude de ce bassin dans sa globalité. En effet, il est courant d'exécuter plusieurs simulations numériques de bassin au cours de la phase d'exploration de ce bassin. Or, la simulation de bassin est très coûteuse en temps de calcul et en mémoire informatique utilisée, notamment en raison de la simulation de la migration des hydrocarbures dans le bassin sédimentaire.

De manière générale, une simulation de bassin est lancée à partir de paramètres de simulation, qui sont bien souvent estimés à partir d'hypothèses sur l'histoire de la formation du bassin. Le résultat de la simulation de bassin, qui comprend notamment une image du bassin au temps actuel est alors comparé aux connaissances réelles que l'on a du bassin à l'actuel, ces connaissances résultant de mesures directes sur le bassin. Si des divergences trop importantes sont observées entre prédiction par simulation et observations, une nouvelle simulation de bassin est en principe lancée, en modifiant les paramètres de la simulation, et ce jusqu'à une convergence entre simulation et observations. Toutefois, le nombre de simulations numériques de bassin effectivement lancées est parfois limité en pratique, en raison des importants temps de calcul impliqués par une simulation numérique de bassin. Mais un nombre limité de simulations de bassin peut réduire les chances de succès lors de la phase d'exploitation des hydrocarbures de ce bassin.

Par ailleurs, il est courant d'avoir de nouvelles informations relatives au bassin au cours de la phase d'exploration de ce bassin. Par exemple, il peut s'agir de nouvelles informations apportées par un nouveau puits d'exploration, de nouvelles mesures dans des puits, une meilleure connaissance de la matière organique présente dans la roche mère du bassin etc. En principe, une nouvelle simulation de bassin devrait être lancée, afin de tenir compte de ces nouvelles informations, et afin de permettre une meilleure prédiction du potentiel pétrolier de ce bassin. Une nouvelle simulation de bassin n'est toutefois pas toujours systématiquement lancée, en raison des importants temps de calcul de la simulation de bassin, ce qui peut être dommageable pour les chances de succès de l'exploitation des hydrocarbures de ce bassin.

La présente invention permet de pallier ces inconvénients. Plus particulièrement, la présente invention permet de déterminer les contributions respectives des différents mécanismes de migration des hydrocarbures dans un bassin sédimentaire. En plus de contribuer à une meilleure analyse du potentiel pétrolier d'un bassin, connaître le mécanisme prépondérant de migration des hydrocarbures dans un bassin sédimentaire peut permettre de choisir une méthode de simulation de la migration des hydrocarbures simplifiée et donc moins coûteuse (telles que la méthode par lancer de rayons, ou la méthode par invasion-percolation). En réduisant le temps de calcul de la simulation de bassin, cela permet de pouvoir lancer à plusieurs reprises une simulation de bassin au cours de la phase d'exploration de ce bassin, et ainsi de mieux prédire le potentiel pétrolier de ce bassin. L'invention contribue donc à une meilleure connaissance du bassin étudié, et permet ainsi d'améliorer l'exploitation des hydrocarbures de ce bassin.

## Résumé de l'invention

L'invention est définie par les revendications 1 à 7.

## Liste des figures

La Figure 1 montre une représentation schématique d'un bassin sédimentaire comportant une roche mère, deux roches réservoirs et des chemins de migration potentiels.
La Figure 2 montre un exemple de bassin sédimentaire (à gauche) et un exemple de représentation maillée (à droite) de ce bassin.
La Figure 3 montre un exemple de reconstruction structurale d'un bassin sédimentaire selon un mode de réalisation de l'invention, représenté par trois états de déformations pris à trois états géologiques différents.

## Description des modes de réalisation

Selon un premier aspect, l'invention concerne un procédé mis en oeuvre par ordinateur pour déterminer un mécanisme de migration des hydrocarbures prépondérant dans un bassin sédimentaire. Selon l'invention, on considère que le bassin sédimentaire a subi une pluralité d'événements géologiques définissant une séquence d'états du bassin, chacun desdits états s'étendant entre deux événements géologiques successifs. De manière préférée, la séquence d'états peut couvrir une période de temps couvrant au moins la production d'hydrocarbures, notamment par maturation d'une matière organique présente dans une roche-mère du bassin, et le déplacement de ces hydrocarbures produits vers au moins une roche réservoir du bassin au cours des temps géologiques. Par la suite et de manière non limitative,

4

on note Ai un état de la séquence d'états du bassin, i étant un entier variant de 1 à n, An représentant l'état du bassin au temps actuel. Selon l'invention, n vaut au moins 2. Autrement dit, la séquence d'états selon l'invention comprend l'état du bassin au temps actuel et au moins un état dudit bassin à un temps géologique antérieur.

La présente invention est mise en oeuvre au moyen d'une simulation numérique de bassin exécutée sur ordinateur, permettant au moins de simuler la migration des hydrocarbures dans le bassin par au moins deux mécanismes de migration des hydrocarbures. Selon une mise en oeuvre préférée de l'invention, la simulation numérique de bassin implémente l'équation de Darcy généralisée pour modéliser la migration des hydrocarbures dans le bassin tel que cela sera décrit ci-après.

Selon un deuxième aspect, l'invention concerne un procédé pour exploiter des hydrocarbures présents dans un bassin sédimentaire, le procédé selon le deuxième aspect comprenant la mise en oeuvre du procédé pour déterminer un mécanisme de migration des hydrocarbures prépondérant dans un bassin selon le premier aspect de l'invention.

Le procédé pour déterminer un mécanisme de migration des hydrocarbures prépondérant dans un bassin selon l'invention comporte au moins les étapes 1 à 4 décrites ci-après.

Le procédé pour exploiter des hydrocarbures présents dans un bassin sédimentaire selon l'invention comprend en outre au moins l'étape 6 décrite ci-après, et de préférence les étapes 5 et 6 décrites ci-après.

## 1) Mesures de grandeurs physiques relatives au bassin

Au cours de cette étape, il s'agit d'acquérir des mesures de grandeurs physiques relatives au bassin étudié, au moyen de capteurs.

De manière non limitative, les capteurs peuvent consister en des outils de mesures diagraphiques, en des sources et récepteurs sismiques, en des préleveurs et analyseurs de fluide, etc.

Ainsi, les mesures selon l'invention peuvent consister en des études d'affleurement, des campagnes d'acquisition sismique, des mesures dans les puits (par diagraphies par exemple), des analyses pétrophysiques et/ou géochimiques de carottes prélevées in situ.

A partir de ces mesures, on peut en déduire des propriétés pétrophysiques associées au bassin étudié, tels que le faciès (lithologie), la porosité, la perméabilité, ou encore la teneur en matière organique en des points de mesure du bassin. On peut aussi obtenir des informations sur les propriétés des fluides présents dans le bassin, telles que des valeurs de saturation en les différents fluides présents dans le bassin. Egalement, on peut mesurer des températures en différents points du bassin (températures de fond de puit notamment).

## 2) Construction d'une représentation maillée représentative du bassin à l'état actuel

Au cours de cette étape, il s'agit de construire une représentation maillée représentative du bassin à l'état actuel, à partir des mesures des grandeurs physiques réalisées à l'étape précédente.

Plus précisément, la construction d'une représentation maillée d'un bassin consiste à discrétiser en trois dimensions l'architecture du bassin, à attribuer des propriétés à chacune des mailles de cette représentation maillée. Pour ce faire, on exploite notamment des grandeurs physiques réalisées en différents points du bassin décrites ci-dessus, que l'on extrapole et/ou interpole, en les différentes mailles de la représentation maillée, suivant des hypothèses plus ou moins restrictives.

Le plus souvent la discrétisation spatiale d'un bassin sédimentaire est organisée en couches de mailles, représentant chacune les différentes couches géologiques du bassin étudié. La Figure 2 illustre à gauche un exemple de bassin sédimentaire au temps actuel, et à droite un exemple de représentation maillée de ce bassin.

Selon une mise en oeuvre de l'invention, la représentation maillée pour l'état actuel An du bassin donné comprend notamment en chaque maille une information sur la lithologie, une valeur de porosité, une valeur de perméabilité, une teneur en matière organique, ainsi que des propriétés relatives aux fluides présents dans la maille, telles que la saturation.

## 3) Reconstruction structurale de l'architecture du bassin pour les différents états

Au cours de cette étape, il s'agit de reconstruire les architectures passées du bassin pour les différents états Ai, avec i variant de 1 à n-1. Pour ce faire, on déforme la représentation maillée construite à l'étape précédente, qui représente le bassin au temps actuel, afin de représenter l'évolution anti-chronologique de l'architecture du sous-sol au cours des temps géologiques, et ce pour les différents états Ai. A l'issue de cette étape, on dispose d'une représentation maillée pour chaque état Ai, avec i variant de 1 à n.

Selon un premier mode de réalisation de la présente invention, la reconstruction structurale peut être particulièrement simple si elle se base sur l'hypothèse que sa déformation résulte uniquement d'une combinaison de mouvements verticaux par compaction du sédiment ou par surrection ou affaissement de son socle. Cette technique, connue sous le terme de "backstripping" (ou "décompaction progressive du bassin" en français) est décrite par exemple dans (Steckler et Watts, 1978).

Selon un autre mode de réalisation de la présente invention, dans le cas de bassins dont l'histoire tectonique est complexe, notamment dans le cas de bassins présentant des failles, il convient d'utiliser des techniques aux hypothèses moins restrictives, telles que la restauration structurale. Une telle restauration structurale est décrite par exemple dans le document FR 2 930 350 A1 (US 2009/0265152 A1). La restauration structurale consiste à calculer les déformations successives que le bassin a subies, en intégrant les déformations dues à la compaction et celles qui résultent des forces tectoniques.

Dans l'exemple de la Figure 3, trois états sont utilisés pour représenter la déformation du sous-sol au cours des temps géologiques. La représentation maillée de gauche représente l'état actuel, où l'on peut observer une interface de glissement (ici une faille). La représentation maillée de droite représente le même bassin sédimentaire pour un état Ai, antérieur à l'état actuel. Pour cet état Ai, les couches sédimentaires n'étaient pas encore fracturées. La représentation maillée centrale est un état intermédiaire, c'est-à-dire qu'elle représente le bassin sédimentaire à un état Ai', compris entre l'état Ai et l'état actuel. On constate que le glissement le long de la faille a commencé à modifier l'architecture du bassin.

**4) Simulation numérique de bassin et détermination d'un mécanisme de migration prépondérant**

Au cours de cette étape, il s'agit de construire un modèle de bassin pour chacun des états Ai, au moyen d'une simulation numérique de bassin simulant au moins la migration des hydrocarbures dans le bassin selon au moins deux mécanismes de migration.

De manière générale, une simulation (ou encore un simulateur) numérique de bassin est un logiciel exécuté sur ordinateur, permettant d'effectuer une simulation de bassin de façon numérique. Plus précisément, une simulation numérique de bassin permet de simuler numériquement l'évolution (ce qui inclut leur genèse et leur migration) des fluides (hydrocarbures, mais également l'eau de formation) au sein du bassin étudié et de leurs propriétés (évolution des pressions de fluide, des saturations et des températures), ainsi que l'évolution de propriétés pétrophysiques des roches constituant les couches sédimentaires du bassin étudié (notamment la porosité et la perméabilité).

La simulation de bassin selon l'invention est réalisée au moyen d'une simulation numérique de bassin appliquée à la séquence d'états Ai du bassin. Selon l'invention, le simulateur de bassin requiert de disposer de représentations maillées du bassin pour chaque état Ai du bassin telles que décrites ci-dessus.

De manière générale, la simulation de bassin consiste en la résolution d'un système d'équations différentielles décrivant l'évolution au cours du temps des grandeurs physiques étudiées. Pour ce faire, on peut par exemple utiliser une discrétisation par la méthode des volumes finis, comme décrit par exemple dans (Scheichl et al., 2003). Conformément au principe des méthodes de volumes finis centrés sur les mailles, les inconnues sont discrétisées par une valeur constante par maille et les équations de conservation (masse ou chaleur) sont intégrées en espace sur chaque maille et en temps entre deux états Ai successifs. Les équations discrètes expriment alors que la quantité conservée dans une maille à un état Ai donné est égale à la quantité contenue dans la maille à l'état antérieur Ai-1, augmentée des flux de quantités entrés dans la maille et réduite des flux de quantités sorties de la maille par ses faces, plus les apports extérieurs.

De manière classique, pour chaque état Ai et dans chaque maille de la représentation maillée du bassin pour l'état Ai considéré, le simulateur de bassin permet au moins de déterminer les quantités physiques suivantes : les vitesses et directions de déplacement des fluides présents dans le bassin. De plus, de manière implicite et de manière classique en simulation de bassin, on détermine en outre pour chaque état Ai et dans chaque maille de la représentation maillée du bassin pour l'état Ai considéré les quantités suivantes : la température, la pression et la quantité d'hydrocarbures.

Un exemple d'un tel simulateur de bassin est le logiciel TemisFlow® (IFP Énergies nouvelles, France).

La simulation numérique de bassin selon l'invention permet de simuler la migration des hydrocarbures dans le bassin selon au moins deux mécanismes de migration. Selon l'invention, on détermine une contribution de chacun des mécanismes de migration, et ce pour chaque état Ai et dans chaque maille de la représentation maillée du bassin pour l'état Ai considéré.

De manière préférée, la simulation de bassin selon l'invention implémente l'équation de Darcy généralisée, bien connue des spécialistes, et qui peut s'écrire sous la forme :
[Math 5]

$$U = \frac{-K.kr}{\mu}[grad(P - \rho w \, gz) + \, grad(Pc) - \, (\rho w - \rho)g.grad(z)] \quad (1)$$

dans laquelle U est la vitesse de déplacement de la phase hydrocarbure dans le milieu, K la perméabilité intrinsèque à l'eau du milieu, μ la viscosité du fluide, kr la perméabilité relative du milieu pour la phase hydrocarbure, P la pression de la phase eau, ρw la masse volumique de l'eau, ρ la masse volumique de la phase hydrocarbure considérée, z la profondeur, Pc la pression capillaire de la roche et g l'accélération de la pesanteur. L'équation de Darcy généralisée permet de simuler la migration des hydrocarbures selon trois mécanismes de migration : par hydrodynamisme, par capillarité et par flottabilité. Par contre, la loi de Darcy ne permet pas la simulation d'un transport d'hydrocarbures sous forme de gaz dissous dans l'eau porale (transport par advection).

Selon cette mise en oeuvre préférée de l'invention, pour chaque état Ai et dans chaque maille de la représentation maillée du bassin pour l'état Ai considéré, on résout l'équation de Darcy généralisée. Selon cette mise en oeuvre, on détermine une contribution de chacun des mécanismes de migration modélisé par l'équation de Darcy généralisée, et ce pour chaque état Ai et dans chaque maille de la représentation maillée du bassin pour l'état Ai considéré. Plus précisément, selon une mise en oeuvre de l'invention, en une maille d'une représentation maillée d'un état Ai donné, on détermine la contribution du déplacement de ces hydrocarbures dans le bassin sous l'effet :

- de l'hydrodynamisme selon une formule du type :
[Math 6]

$$CH = grad(P - \rho_w gz)/U \quad (2)$$

- des forces capillaires selon une formule du type :
[Math 7]

$$CC = grad(P_c)/U \quad (3)$$

- de la flottabilité (poussée d'Archimède) selon une formule du type :
[Math 8]

$$CF = (\rho_w - \rho)g.\,grad(z)/U \quad (4)$$

dans laquelle U est la vitesse de déplacement de la phase hydrocarbure dans le milieu telle que décrite par l'équation (1) ci-dessus, P la pression de la phase eau, ρw la masse volumique de l'eau, ρ la masse volumique de la phase hydrocarbure considérée, z la profondeur, Pc la pression capillaire de la roche et g l'accélération de la pesanteur.

Selon l'invention, à partir de la contribution d'au moins deux des mécanismes de migration des hydrocarbures dans le bassin pour chaque état Ai et dans chaque maille de la représentation maillée du bassin pour l'état Ai considéré, on peut déterminer un mécanisme de migration des hydrocarbures prépondérant pour un ou plusieurs ensembles de mailles de la représentation maillée d'un état Ai et/ou un mécanisme de migration des hydrocarbures prépondérant pour une pluralité d'états Ai. Autrement dit, on détermine soit des zones spatiales du bassin étudié pour lesquelles un des mécanismes de migration des hydrocarbures est prépondérant à un temps géologique donné, soit des périodes temporelles de l'histoire du bassin pour lesquelles un des mécanismes de migration des hydrocarbures est prépondérant, ou encore des zones spatiales du bassin pour lesquelles un des mécanismes de migration des hydrocarbures est prépondérant pendant certaines périodes temporelles de l'histoire du bassin étudié.

De manière générale, l'information selon laquelle tel ou tel mécanisme de migration des hydrocarbures est prépondérant pour une zone spatiale du bassin et/ou pendant une période temporelle de l'histoire du bassin étudié est particulièrement importante car cela permet de mieux comprendre les événements ayant contribué à la formation du bassin sédimentaire que l'on observe au temps actuel, et ainsi contribuer à une meilleure estimation du potentiel pétrolier du bassin étudié.

## 5) Calibration des paramètres de simulation de bassin

Cette étape, qui est une étape optionnelle, peut être avantageusement mise en oeuvre dans le cadre du procédé selon un deuxième aspect de l'invention qui concerne un procédé pour exploiter des hydrocarbures présents dans un bassin sédimentaire.

De manière générale, l'information selon laquelle tel ou tel mécanisme de migration des hydrocarbures est prépondérant pour une zone spatiale du bassin et/ou pendant une période temporelle de l'histoire du bassin est particulièrement importante dans un procédé pour exploiter des hydrocarbures présents dans un bassin sédimentaire mis en oeuvre au moyen d'une simulation de bassin, car de tels procédés nécessitent bien souvent de lancer plusieurs simulations numériques de bassin, notamment afin de calibrer les paramètres d'entrée de la simulation numérique de bassin, tels que les températures à la surface du bassin et basales, les pressions sur les bords du modèle géologique, les propriétés pétrophysiques des roches ou encore les propriétés physico-chimiques des fluides. En effet, il est classique de lancer plusieurs simulations numériques de bassin, en modifiant les paramètres d'entrée sus-cités, jusqu'à ce que le résultats des simulations numériques de bassin (en général le résultat de la simulation numérique au temps actuel) soient conformes aux grandeurs physiques mesurées à l'étape 1, telles que les températures, les densités, les porosités ou encore les pressions.

Selon une mise en oeuvre de l'invention, cette étape de calibration des paramètres de la simulation numérique de bassin peut être réalisée en modifiant les paramètres de simulation numérique de bassin jusqu'à minimiser les écarts entre la représentation maillée obtenue à l'état actuel par simulation numérique de bassin et la représentation maillée du bassin à l'état actuel établie à l'étape 1 ci-dessus à partir de mesures de grandeurs physiques. Selon une mise en oeuvre de l'invention, on peut utiliser un algorithme d'optimisation, par exemple basé sur la méthode du gradient conjugué, pour minimiser de manière automatisée et selon un processus itératif, une fonction objectif mesurant les écarts entre les valeurs des grandeurs physiques mesurées et les valeurs de ces mêmes grandeurs physiques simulées. Une telle mise à jour automatisée des paramètres de la simulation numérique de bassin peut être réalisée au moyen du logiciel COUGARFLOW® (IFP Énergies nouvelles, France).

Selon l'invention, l'information relative à au moins un mécanisme de migration prépondérant pour au moins un ensemble de mailles d'une représentation maillée et/ou pour au moins un état Ai du bassin étudié, peut être utile d'au moins deux façons, éventuellement combinables

- on utilise l'information relative à un mécanisme de migration prépondérant pour modifier au moins un paramètre en particulier de la simulation numérique de bassin. Par exemple, s'il s'avère que la contribution du mécanisme de migration par flottabilité est prépondérante, on peut privilégier, parmi les paramètres de simulation à modifier, les produits de la réaction de maturation de la roche mère, ou encore les densités des fractions fluides. Selon un autre exemple, s'il s'avère que la contribution du mécanisme de migration par hydrodynamisme est prépondérante, on peut privilégier, parmi les paramètres de simulation à modifier, les paramètres impactant le régime de pression comme les perméabilités des roches ou encore les taux de sédimentation ou même les transformations minérales secondaires.

- on utilise l'information relative à un mécanisme de migration prépondérant pour, lorsqu'une nouvelle simulation numérique de bassin est lancée, ne résoudre les écoulements pour cet ensemble de mailles d'une représentation maillée et/ou pour au moins un état Ai du bassin étudié que pour le mécanisme prépondérant ainsi mis en évidence. Cela permet d'utiliser des équations simplifiées par rapport à l'équation de Darcy généralisée, très coûteuse en temps de calcul, et ainsi de réduire la durée et les coûts d'une phase d'estimation du potentiel pétrolier d'un bassin sédimentaire. Par exemple, s'il s'avère que la contribution du mécanisme de migration par flottabilité est prépondérante, alors il est possible de lancer une simulation de bassin implémentant une méthode par tracé de rayons telle que décrite dans le document (Sylta, 1991), moins coûteuse en temps de calcul que la résolution de l'équation de Darcy généralisée complète. De même, s'il s'avère que la migration des hydrocarbures est majoritairement conditionnée par le réseau de capillaire du milieu poreux, alors il est possible d'utiliser un modèle de migration connu sous le terme "invasion percolation", également bien plus rapide que la résolution de l'équation de Darcy complète.

Ainsi, la détermination du ou des mécanismes de migration des hydrocarbures prépondérant pour un ou plusieurs ensembles de mailles d'une représentation maillée à un état Ai donné et/ou du mécanisme de migration des hydrocarbures prépondérant pour une pluralité d'états Ai du bassin permet de modifier des paramètres pertinents de la simulation de bassin et/ou d'avoir recours à des simulations de bassin moins coûteuses en temps de calcul, pouvant ainsi être lancées en plus grand nombre, ce qui peut contribuer à une calibration plus précise des paramètres de simulation de bassin. Un modèle de bassin calibré de manière précise permet de mieux comprendre les événements ayant contribué à la formation du bassin sédimentaire que l'on observe au temps actuel, et conduit ainsi à une meilleure estimation du potentiel pétrolier du bassin étudié.

**6) Exploitation des hydrocarbures du bassin sédimentaire**

A l'issue de la mise en oeuvre des précédentes étapes, on dispose de résultats de simulation de bassin, de préférence calibrés pour le bassin étudié. La simulation de bassin selon l'invention permet au moins de déterminer la migration des hydrocarbures dans le bassin dans chacune des mailles de chacune des représentations maillées du bassin. De manière implicite, et comme cela est classique en simulation de bassin, on dispose en outre de la quantité des hydrocarbures présents dans chacune des mailles de la représentation maillée du bassin au temps actuel.

En outre, en fonction du simulateur de bassin utilisé pour mettre en oeuvre l'invention, on peut disposer par exemple d'informations sur :

> i. la mise en place des couches sédimentaires,
> ii. leur compaction sous l'effet du poids des sédiments sus-jacents,
> iii. leur réchauffement au cours de leur enfouissement,
> iv. les modifications de pressions de fluides résultant de cet enfouissement,
> v. la formation des hydrocarbures formés par thermogénèse.

A partir de telles informations, le spécialiste peut alors déterminer des mailles de la représentation maillée du bassin au temps actuel comportant des hydrocarbures, ainsi que la teneur, la nature et la pression des hydrocarbures qui y sont piégés. On peut alors sélectionner les zones du bassin étudié présentant le meilleur potentiel pétrolier. Ces zones sont alors identifiées comme des réservoirs ou encore des gisements d'hydrocarbures du bassin sédimentaire étudié.

Au cours de cette étape, il s'agit de déterminer au moins un schéma d'exploitation des hydrocarbures contenus dans la bassin sédimentaire étudié. De manière générale, un schéma d'exploitation comprend un nombre, une géométrie et une implantation (position et espacement) des puits injecteurs et producteurs à forer dans le bassin. Un schéma d'exploitation peut en outre comprendre un type de récupération assistée des hydrocarbures contenus dans le ou les réservoirs du bassin, telle qu'une récupération assistée au moyen de l'injection d'une solution comprenant un ou des polymères, de la mousse de $CO_2$, etc. Un schéma d'exploitation d'un réservoir d'hydrocarbures d'un bassin doit par exemple permettre un fort taux de récupération des hydrocarbures piégés dans ce réservoir, sur une longue durée d'exploitation, et nécessitant un nombre de puits limité. Autrement dit, le spécialiste prédéfinit des critères d'évaluation selon lesquels un schéma d'exploitation des hydrocarbures présents dans un réservoir d'un bassin sédimentaire est considéré comme suffisamment performant pour être mis en oeuvre.

Selon un mode de mise en oeuvre de l'invention, on définit une pluralité de schémas d'exploitation des hydrocarbures contenus dans un ou des réservoirs géologiques du bassin étudié et on estime, à l'aide d'un simulateur de réservoir (tel que le logiciel PumaFlow® (IFP Energies nouvelles, France)) au moins un critère d'évaluation de ces schémas d'exploitation. Ces critères d'évaluation peuvent comprendre la quantité d'hydrocarbures produit pour chacun des différents schémas d'exploitation, la courbe représentative de l'évolution de la production dans le temps au niveau de chacun des puits envisagés, le rapport huile sur gaz (GOR) au niveau de chaque puits envisagé etc. Le schéma selon lequel les hydrocarbures contenus dans le ou les réservoirs du bassin étudié sont réellement exploités peut alors correspondre à celui satisfaisant au moins un des critères d'évaluation des différentes schémas d'exploitation.

Puis, une fois un schéma d'exploitation déterminé, les hydrocarbures piégés dans le ou les réservoirs pétroliers du bassin sédimentaire étudié sont exploités en fonction de ce schéma d'exploitation, notamment au moins en forant les puits injecteurs et producteurs du schéma d'exploitation ainsi déterminés, et en installant les infrastructures de production nécessaires au développement de ce ou ces réservoirs. Dans le cas où le schéma d'exploitation a en outre été déterminé en estimant la production d'un réservoir associée à différents types de récupération assistée, on injecte dans le puits injecteur le ou les types d'additifs (polymères, tensio-actifs, mousse de $CO_2$) sélectionnés.

Il est bien entendu qu'un schéma d'exploitation des hydrocarbures d'un bassin peut être évolutif sur la durée de l'exploitation des hydrocarbures de ce bassin, en fonction par exemple de connaissances additionnelles relatives au bassin acquises pendant cette exploitation, des améliorations dans les différents domaines techniques intervenant lors d'une exploitation d'un gisement d'hydrocarbures (améliorations dans le domaine du forage, de la récupération assistée par exemple).

## Equipement et produit programme d'ordinateur

Le procédé selon l'invention est mis en oeuvre au moyen d'un équipement (par exemple un poste de travail informatique) comprenant des moyens de traitement des données (un processeur) et des moyens de stockage de données (une mémoire, en particulier un disque dur), ainsi qu'une interface d'entrée et de sortie pour saisir des données et restituer les résultats du procédé.

Les moyens de traitement de données sont configurés pour réaliser en particulier les étapes 2, 3 et 4 décrites ci-dessus, ainsi que l'étape optionnelle 5.

En outre, l'invention concerne un produit programme d'ordinateur téléchargeable depuis un réseau de communication et/ou enregistré sur un support lisible par ordinateur et/ou exécutable par un processeur, comprenant des instructions de code de programme pour la mise en oeuvre du procédé tel que décrit précédemment, lorsque ledit programme est exécuté sur un ordinateur.

**Revendications**

1. Procédé pour exploiter des hydrocarbures présents dans un bassin sédimentaire, ledit bassin sédimentaire ayant subi une pluralité d'événements géologiques définissant une séquence d'états dudit bassin, ladite séquence d'états comprenant l'état dudit bassin au temps actuel et au moins un état dudit bassin à un temps géologique antérieur, au moyen d'une simulation numérique de bassin exécutée sur ordinateur, ladite simulation numérique de bassin simulant au moins une migration desdits hydrocarbures dans ledit bassin selon au moins deux mécanismes de migration, lesdits mécanismes de migration étant induits par de l'hydrodynamisme et/ou par des forces capillaires et/ou par de la flottabilité, **caractérisé en ce que** ledit procédé comprend la détermination d'un mécanisme de migration desdits hydrocarbures prépondérant dans ledit bassin sédimentaire par la mise en oeuvre par des moyens de traitement de données d'au moins les étapes suivantes :

   A. on réalise des mesures de grandeurs physiques relatives audit bassin au moyen de capteurs, et on construit une représentation maillée représentative dudit bassin pour ledit état dudit bassin audit temps actuel ;
   B. à partir de ladite représentation maillée dudit bassin pour ledit état dudit bassin audit temps actuel, on construit une représentation maillée dudit bassin pour chacun desdits états dudit bassin auxdits temps géologiques antérieurs ;
   C. au moyen de ladite simulation numérique de bassin et desdites représentations maillées pour chacun desdits états, on détermine, pour chacun desdits états et en chacune desdites mailles de ladite représentation maillée dudit état, ladite contribution de chacun desdits mécanismes de migration desdits hydrocarbures dans ladite maille pour ledit état,
   D. on en déduit au moins un mécanisme de migration desdits hydrocarbures prépondérant pour au moins un ensemble de mailles d'au moins une représentation maillée dudit bassin pour au moins un desdits états ;
   et en que à partir au moins dudit mécanisme de migration desdits hydrocarbures prépondérant, on réalise l'étape suivante :
   E. on détermine un schéma d'exploitation dudit bassin comprenant au moins une implantation d'au moins un puits injecteur et/ou d'au moins un puits producteur, et on exploite lesdits hydrocarbures dudit bassin au moins en forant lesdits puits de ladite implantation et en les équipant d'infrastructures d'exploitation.

2. Procédé selon la revendication 1, dans lequel ladite simulation numérique de bassin implémente une équation de Darcy généralisée pour simuler ladite migration desdits hydrocarbures dans ledit bassin, ladite équation de Darcy généralisée s'exprimant selon une formule du type :

$$U = \frac{-K.kr}{\mu}\left[grad(P - \rho w\, gz) + grad(Pc) - (\rho w - \rho)g.grad(z)\right]$$

   dans laquelle U est la vitesse de déplacement d'une phase hydrocarbure, K une perméabilité intrinsèque à l'eau, $\mu$ une viscosité de ladite phase hydrocarbure, kr la perméabilité relative du milieu pour ladite phase hydrocarbure, P une pression de la phase eau, $\rho w$ la masse volumique de l'eau, $\rho$ la masse volumique de ladite phase hydrocarbure, z la profondeur, Pc la pression capillaire et g l'accélération de la pesanteur.

3. Procédé selon la revendication 2, dans ladite contribution d'un desdits mécanismes de migration induit par l'hydrodynamisme s'exprime selon une formule du type :

$$CH = grad(P - \rho_w gz)/U.$$

4. Procédé selon l'une des revendications 2 à 3, dans lequel ladite contribution d'un desdits mécanismes de migration induit par les forces capillaires s'exprime selon une formule du type :

$$CC = grad(P_c)/U.$$

5. Procédé selon l'une des revendications 2 à 4, dans lequel dans lequel ladite contribution d'un desdits mécanismes de migration induit par la flottabilité s'exprime selon une formule du type :

$$CF = (\rho_w - \rho)g.\,grad(z)/U.$$

**6.** Procédé selon l'une des revendications précédentes, dans lequel, à partir au moins dudit mécanisme de migration des hydrocarbures prépondérant, on réalise en outre au moins les étapes suivantes :

a) au moyen d'une simulation numérique de bassin apte à simuler une migration desdits hydrocarbures dans ledit bassin selon ledit mécanisme de migration prépondérant et à partir de paramètres de ladite simulation de bassin, on détermine des résultats de simulation de bassin fonction desdits paramètres de ladite simulation de bassin ;
b) on mesure des écarts entre au moins une partie desdits résultats de ladite simulation de bassin audit temps actuel et au moins une partie desdites mesures desdites grandeurs physiques ;
c) on réitère les étapes a) et b) jusqu'à ce que lesdits écarts soient inférieurs à un seuil prédéfini, lesdits paramètres de ladite simulation de bassin étant modifiés à chacune desdites itérations de ladite réitération ;

et dans lequel, à partir en outre d'au moins une partie desdits résultats de ladite simulation de bassin, on détermine ledit schéma d'exploitation dudit bassin.

**7.** Produit programme d'ordinateur téléchargeable depuis un réseau de communication et/ou enregistré sur un support lisible par ordinateur et/ou exécutable par un processeur, comprenant des instructions de code de programme pour la mise en oeuvre des étapes A) à D) de la méthode selon la revendication 1, lorsque ledit programme est exécuté sur un ordinateur.

## Patentansprüche

**1.** Verfahren zur Ausbeutung von Kohlenwasserstoffen, die in einem Sedimentbecken vorhanden sind, wobei das Sedimentbecken eine Mehrzahl von geologischen Ereignissen erfahren hat, die eine Abfolge von Zuständen des Beckens definieren, wobei die Abfolge von Zuständen den Zustand des Beckens zur aktuellen Zeit und wenigstens einen Zustand des Beckens zu einer früheren geologischen Zeit umfasst, mittels einer digitalen Beckensimulation, die am Computer ausgeführt wird, wobei die digitale Beckensimulation wenigstens eine Migration der Kohlenwasserstoffe in dem Becken gemäß wenigstens zwei Migrationsmechanismen simuliert, wobei die Migrationsmechanismen durch Hydrodynamik und/oder durch Kapillarkräfte und/oder durch Auftrieb bewirkt werden, **dadurch gekennzeichnet, dass** das Verfahren das Bestimmen eines maßgeblichen Migrationsmechanismus der Kohlenwasserstoffe in dem Sedimentbecken durch die Umsetzung wenigstens der folgenden Schritte durch Datenverarbeitungsmittel umfasst:

A. Es werden Messungen physikalischer Größen bezogen auf das Becken mittels Sensoren durchgeführt, und es wird eine Gitterdarstellung, die für das Becken repräsentativ ist, für den Zustand des Beckens zur aktuellen Zeit erstellt;
B. Anhand der Gitterdarstellung des Beckens für den Zustand des Beckens zur aktuellen Zeit wird eine Gitterdarstellung des Beckens für jeden der Zustände des Beckens zu den früheren geologischen Zeiten erstellt;
C. Mittels der digitalen Beckensimulation und der Gitterdarstellungen für jeden der Zustände wird für jeden der Zustände und in jeder der Maschen der Gitterdarstellung des Zustands der Beitrag jedes der Migrationsmechanismen der Kohlenwasserstoffe in der Masche für den Zustand bestimmt,
D. Daraus wird wenigstens ein maßgeblicher Migrationsmechanismus der Kohlenwasserstoffe für wenigstens eine Menge von Maschen wenigstens einer Gitterdarstellung des Beckens für wenigstens einen der Zustände abgeleitet;
und dass anhand wenigstens des maßgeblichen Migrationsmechanismus der Kohlenwasserstoffe der folgende Schritt durchgeführt wird:
E. Es wird ein Ausbeutungsschema des Beckens bestimmt, das wenigstens eine Anordnung von wenigstens einem Injektionsbrunnen und/oder wenigstens einem Produktionsbrunnen umfasst, und es werden die Kohlenwasserstoffe des Beckens wenigstens durch Bohrung der Brunnen der Anordnung und durch Ausstattung dieser mit Ausbeutungsinfrastrukturen ausgebeutet.

**2.** Verfahren nach Anspruch 1, wobei die digitale Beckensimulation eine verallgemeinerte Darcy-Gleichung zur Simulation der Migration der Kohlenwasserstoffe in dem Becken implementiert, wobei die Darcy-Gleichung gemäß einer Formel des folgenden Typs ausgedrückt wird:

$$U = \frac{-K\,kr}{\mu}\left[\,grad(P - pw\,gz) + grad(Pc) - (pw - p)g.grad(z)\right]$$

wobei U die Bewegungsgeschwindigkeit einer Kohlenwasserstoffphase ist, K eine intrinsische Wasserdurchlässigkeit, p eine Viskosität der Kohlenwasserstoffphase, kr die relative Durchlässigkeit des Umgebungsmilieus für die Kohlenwasserstoffphase, P ein Druck der Wasserphase, pw die Dichte des Wassers, p die Dichte der Kohlenwasserstoffphase, z die Tiefe, Pc der Kapillardruck und g die Erdbeschleunigung ist.

3. Verfahren nach Anspruch 2, wobei der Beitrag eines der Migrationsmechanismen, der durch Hydrodynamik bewirkt wird, gemäß einer Formel des folgenden Typs ausgedrückt wird:

$$CH = grad(P - p_w gz)/U.$$

4. Verfahren nach einem der Ansprüche 2 bis 3, wobei der Beitrag eines der Migrationsmechanismen, der durch die Kapillarkräfte bewirkt wird, gemäß einer Formel des folgenden Typs ausgedrückt wird:

$$CC = grad(P_c)/U.$$

5. Verfahren nach einem der Ansprüche 2 bis 4, wobei der Beitrag eines der Migrationsmechanismen, der durch den Auftrieb bewirkt wird, gemäß einer Formel des folgenden Typs ausgedrückt wird:

$$CF = (p_w - p)g.grad(z)/U.$$

6. Verfahren nach einem der vorhergehenden Ansprüche, wobei anhand wenigstens des maßgeblichen Migrationsmechanismus der Kohlenwasserstoffe ferner wenigstens die folgenden Schritte durchgeführt werden:

a) mittels einer digitalen Beckensimulation, die geeignet ist, eine Migration der Kohlenwasserstoffe in dem Becken gemäß dem maßgeblichen Migrationsmechanismus und anhand von Parametern der Beckensimulation zu simulieren, werden Beckensimulationsergebnisse bestimmt, die von den Parametern der Beckensimulation abhängig sind;
b) Es werden Abweichungen zwischen wenigstens einem Teil der Ergebnisse der Beckensimulation zur aktuellen Zeit und wenigstens einem Teil der Messungen der physikalischen Größen gemessen;
c) die Schritte a) und b) werden wiederholt, bis die Abweichungen kleiner als eine vorgegebene Schwelle sind, wobei die Parameter der Beckensimulation bei jeder der Wiederholungen der Wiederholung verändert werden;

und wobei ferner anhand wenigstens eines Teils der Ergebnisse der Beckensimulation das Ausbeutungsschema des Beckens bestimmt wird.

7. Computerprogrammprodukt, das aus einem Kommunikationsnetz heruntergeladen werden kann und/oder auf einem computerlesbaren Datenträger gespeichert ist und/oder von einem Prozessor ausgeführt werden kann, umfassend Programmcode-Anweisungen für die Umsetzung der Schritte A) bis D) des Verfahrens nach Anspruch 1, wenn das Programm auf einem Computer ausgeführt wird.

**Claims**

1. Method for extracting hydrocarbons present in a sedimentary basin, said sedimentary basin having undergone a plurality of geological events defining a sequence of states of said basin, said sequence of states comprising the state of said basin at the current time and at least one state of said basin at a prior geological time, by means of a computer-executed numerical basin simulation, said numerical basin simulation simulating at least migration of said hydrocarbons in said basin according to at least two mechanisms of migration, said mechanisms of migration being induced by hydrodynamics and/or by capillary forces and/or by buoyancy, **characterized in that** said method comprises determining a mechanism of migration of said hydrocarbons that is preponderant in said sedimentary basin through implementation, by data-processing means, of at least the following steps:

A. physical quantities relating to said basin are measured by means of sensors, and a meshed representation representative of said basin is constructed for said state of said basin at said current time;

B. based on said meshed representation of said basin for said state of said basin at said current time, a meshed representation of said basin is constructed for each of said states of said basin at said prior geological times;

C. by means of said numerical basin simulation and of said meshed representations of each of said states, for each of said states and in each of said mesh cells of said meshed representation of said state, said contribution of each of said mechanisms of migration of said hydrocarbons is determined, in said mesh cell, for said state,

D. at least one preponderant mechanism of migration of said hydrocarbons is deduced therefrom for at least one set of mesh cells of at least one meshed representation of said basin for at least one of said states;

and **in that**, based at least on said preponderant mechanism of migration of said hydrocarbons, the following step is carried out:

E. an extraction scheme is determined for said basin, the scheme comprising a pattern of at least one injection well and/or of at least one production well, and said hydrocarbons are extracted from said basin at least by drilling said wells in said pattern and equipping them with extraction equipment.

2. Method according to Claim 1, wherein said numerical basin simulation implements a generalized Darcy equation to simulate said migration of said hydrocarbons in said basin, said generalized Darcy equation being expressed by a formula of the type:

$$U = \frac{-K.kr}{\mu}[grad(P - \rho w\, gz) + grad(Pc) - (\rho w - \rho)g.grad(z)]$$

in which $U$ is the speed of movement of a hydrocarbon phase, $K$ an intrinsic permeability to water, $\mu$ a viscosity of said hydrocarbon phase, $kr$ the relative permeability of the medium to said hydrocarbon phase, $P$ a pressure of the water phase, $\rho w$ the mass density of the water, $\rho$ the mass density of said hydrocarbon phase, $z$ depth, $Pc$ capillary pressure and $g$ the acceleration according to gravity.

3. Method according to Claim 2, wherein said contribution of one of said mechanisms of migration, the mechanism induced by hydrodynamics, is expressed by a formula of the type:

$$CH = grad(P - \rho_w gz)/U.$$

4. Method according to one of Claims 2 to 3, wherein said contribution of one of said mechanisms of migration, the mechanism induced by capillary forces, is expressed by a formula of the type:

$$CC = grad(P_c)/U.$$

5. Method according to one of Claims 2 to 4, wherein said contribution of one of said mechanisms of migration, the mechanism induced by buoyancy, is expressed by a formula of the type:

$$CF = (\rho_w - \rho)g.grad(z)/U.$$

6. Method according to one of the preceding claims, wherein, based at least on said preponderant mechanism of migration of the hydrocarbons, at least the following steps are carried out:

a) by means of a numerical basin simulation able to simulate migration of said hydrocarbons in said basin according to said preponderant mechanism of migration and starting with parameters of said basin simulation, basin simulation results are determined depending on said parameters of said basin simulation;

b) discrepancies are measured between at least some of said results of said basin simulation at said current time and at least some of said measurements of said physical quantities;

c) steps a) and b) are reiterated until said discrepancies are smaller than a predefined threshold, said parameters of said basin simulation being modified in each of said iterations of said reiteration;

and wherein, based further on at least some of said results of said basin simulation, said extraction scheme is determined for said basin.

7. Computer program product downloadable from a communication network and/or stored on a medium that is readable by computer and/or executable by a processor, comprising program-code instructions for implementing steps A) to D) of the method according to Claim 1, when said program is executed on a computer.

[Fig 1]

[Fig 2]

[Fig 3]

RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2110686 A
- US 8150669 B
- EP 2816377 A
- US 20140377872 A
- EP 3075947 A
- US 20160290107 A
- EP 3182176 A
- US 20170177764 A
- US 2014358502 A1
- FR 2930350 A1
- US 20090265152 A1

**Littérature non-brevet citée dans la description**

- **CARRUTHERS.** Transport of secondary oil migration using gradient-driven invasion percolation techniques. Heriot-Watt University, 1998
- **SCHNEIDER F.** Modelling multi-phase flow of petroleum at the sedimentary basin scale. *Journal of Geochemical exploration,* 2003, vol. 78-79, 693-696
- **STECKLER, M.S. ; A.B. WATTS.** Subsidence of the Atlantic-type continental margin off New York. *Earth Planet. Sci. Lett.,* 1978, vol. 41, 1-13
- Modeling of secondary migration and entrapment of a multicomponent hydrocarbon mixture using équation of state and ray-tracing modeling techniques. **SYLTA.** Petroleum migration. Geological Society, 1991, 111-112
- **AL-HAJERI, MUBARAK ; SAEED, M. ; DERKS, JAN ; FUCHS, THOMAS ; HANTSCHEL, T. ; KAUERAUF, ARMIN ; NEUMAIER, MARTIN ; SCHENK, OLIVER ; SWIENTEK, O. ; TESSEN, N.** Basin and petroleum system modeling. *Oilfield Rev.,* 2009, vol. 21